# EUROPEAN PATENT APPLICATION

(11) **EP 4 647 268 A1**
(43) Date of publication of application: **12.11.2025**
(21) Application number: 25173291.3
(22) Date of filing: 29.04.2025
(51) Int. Cl.: B60B 5/02, B60B 21/02, B60B 21/06

(54) **CARBON FIBER BICYCLE RIM AND MANUFACTURING METHOD THEREOF**

(30) Priority: 10.05.2024 CN 202410575472
(71) Applicant: Xiamen Carbonking Composites Technology Co., Ltd, Xiamen City Fujian (CN)
(72) Inventor: Liu, Wurui, Xiamen City (CN); Xiao, Peilong, Xiamen City (CN)
(74) Representative: JWP Patent & Trademark Attorneys

(57) **Abstract**

The present disclosure discloses a carbon fiber bicycle rim and a manufacturing method thereof. The carbon fiber bicycle rim comprises a ring-shaped rim body, which is integrally formed from carbon fiber. The rim body comprises an outer ring wall, an inner ring wall, and two side walls that connect the outer ring wall with the inner ring wall. The outer ring wall has an outer side that forms a semi-closed tire groove and an inner side that encloses together with the inner ring wall and the side walls to form a closed cavity. Connecting portions are arranged in the cavity. The connecting portions have one end that is connected to the outer ring wall and the other end that is connected to the side walls. The connecting portions enclose together with the outer ring wall and the side walls to form hollow channels.

## Description

### FIELD

The present disclosure pertains to the field of carbon fiber products, and more specifically, relates to a carbon fiber bicycle rim and a manufacturing method thereof.

### BACKGROUND

Carbon fiber not only possesses inherent intrinsic properties of carbon materials but also has the softness and processability of textile fibers. Despite having a specific gravity of less than 1/4 that of steel, carbon fiber exhibits such high strength that it has been widely used. Carbon fiber bicycles, known for such performances thereof as light weight and high strength, have become mainstream racing bicycles. Wherein, rims of the carbon fiber bicycles are made from carbon fiber, and weight reduction and strength enhancement have always been the main research and development direction thereof. However, the weight reduction generally requires making the rims thinner and smaller, while the strength enhancement usually requires making them thicker and larger. The two are inherently contradictory. Therefore, a carbon fiber bicycle rim that can balance both the weight reduction and the strength enhancement in a favorable manner is not available on the market at present.

Given this, the inventors of the present application have developed a carbon fiber bicycle rim and a manufacturing method thereof.

### SUMMARY

It is an objective of the present disclosure to provide a carbon fiber bicycle rim and a manufacturing method thereof, which keep the weight basically unchanged, but can effectively improve the strength.

To achieve the above objective, the present disclosure adopts the following technical solution: a carbon fiber bicycle rim and a manufacturing method thereof comprise a ring-shaped rim body, which is integrally formed from carbon fiber; the rim body comprises an outer ring wall, an inner ring wall, and two side walls that connect the outer ring wall with the inner ring wall; the outer ring wall has an outer side that forms a semi-closed tire groove and an inner side that encloses together with the inner ring wall and the side walls to form a closed cavity; connecting portions are arranged in the cavity; the connecting portions have one end that is connected to the outer ring wall and the other end that is connected to the side walls; the connecting portions enclose together with the outer ring wall and the side walls to form hollow channels.

Further, the connecting portions are connected to and arranged between the two side walls and the outer ring wall.

Further, the hollow channels have an inner diameter of 2-6 mm.

Further, the hollow channels are arranged in a shape of a ring along the rim body.

Further, the hollow channels are pre-formed by preform strips that are pre-embedded in the rim body, and the preform strips have a thermal expansion coefficient of 5×10⁻⁴ to 8.0×10⁻⁴/°C.

Further, the connecting portions are provided with receding notches that are in communication with the cavity and the hollow channels, and the preform strips have end portions that are correspondingly exposed at the receding notches.

A manufacturing method of a carbon fiber bicycle rim is used for preparing the above carbon fiber bicycle rim, and comprises the following steps:
S1: preparing a rim preform fixture, preform strips, and well-cut carbon fiber prepregs;
S2: attaching and laying the carbon fiber prepregs in the rim preform fixture correspondingly to pre-form a rim shape, wherein the preform strips are coated with the carbon fiber prepregs to pre-form hollow channels, and the preform strips have end portions that are left exposed outside the hollow channels, while an airbag is placed inside a cavity that is pre-formed;
S3: placing a pre-formed product into a molding die, and applying heat and pressure for molding;
S4: removing a molded product from the molding die, machining communication holes that are in communication with the cavity, and drawing out the preform strips from the communication holes at receding notches.

Further, in step S2, the preform strips are first coated with one layer of isolating film, and the preform strips and the isolating film together are then coated with the carbon fiber prepregs.

Further, one hollow channel is pre-formed by splicing two preform strips, which have both ends that are exposed inside the cavity, and the receding notches in communication with the cavity and the hollow channel are formed at positions where the end portions of the preform strips are exposed.

Further, the communication holes are spoke assembling holes.

After adopting the above technical solution, the present disclosure has the following advantages as compared with the prior art:
in the carbon fiber bicycle rim and the manufacturing method thereof in the present disclosure, the hollow channels are formed between the outer ring wall and the side walls of the carbon fiber bicycle rim by arranging the connecting portions, which keeps the weight of the carbon fiber basically unchanged, but effectively improves the strength and impact resistance thereof, strikes a good balance between the weight and strength of the carbon fiber bicycle rim, and effectively improves the overall performance of the rim.

### BRIEF DESCRIPTION OF DRAWINGS

Figure 1 is a three-dimensional diagram of the carbon fiber bicycle rim in the present disclosure.
Figure 2 is a structure diagram of the carbon fiber bicycle rim in the present disclosure.
Figure 3 is a partial cutaway diagram of receding notches of the carbon fiber bicycle rim in the present disclosure.
Figure 4 is a diagram of pre-forming the carbon fiber bicycle rim with preform strips in the present disclosure.

Description of reference signs:
10 - rim body,
11 - outer ring wall, 111 - extending portion, 112 - tire groove,
12 - inner ring wall,
13 - side wall,
14 - cavity,
15 - connecting portion, 151 - receding notch,
16 - hollow channel,
20 - preform strip,
30 - isolating film.

### DETAILED DESCRIPTIONS

To make the objectives, technical solutions, and advantages of the present disclosure clearer, the present disclosure will be further described below in detail in combination with the drawings and the embodiments. It should be understood that the specific embodiments described herein are only intended to explain the present disclosure, rather than limit the present disclosure.

In the present disclosure, it should be noted that terms such as "upper", "lower", "left", "right", "vertical", "horizontal", "inner", and "outer" are based on orientations or positional relationships shown in the drawings, and used solely for the purpose of facilitating the description of the present disclosure and simplifying the explanation, rather than indicating or implying that devices or components in the present disclosure must have specific orientations. Therefore, these terms should not be construed as limitations upon the present disclosure.

### EMBODIMENTS

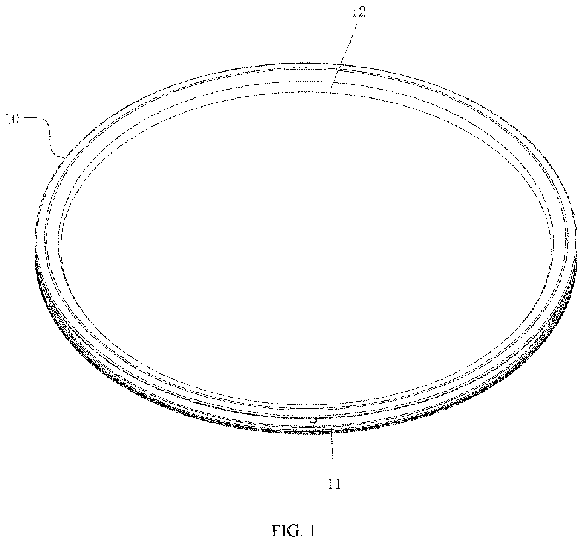

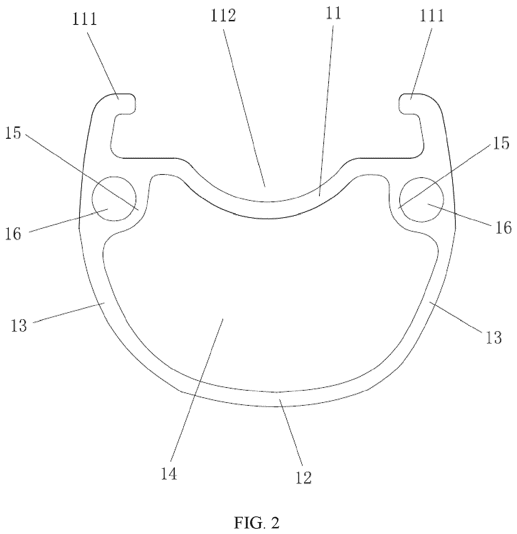

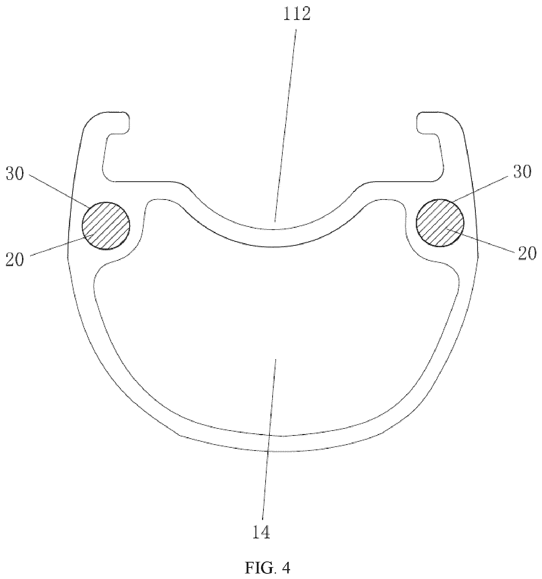

As shown in Figures 1 to 4, the present disclosure discloses a carbon fiber bicycle rim. Compared with carbon fiber bicycle rims of the same specification, the carbon fiber bicycle rim keeps weight basically unchanged, but has higher strength, especially the impact resistance thereof is better and more stable.

As shown in Figures 1 to 4, a carbon fiber bicycle rim comprises a ring-shaped rim body 10, which is integrally formed from carbon fiber; the rim body 10 comprises an outer ring wall 11, an inner ring wall 12, and two side walls 13 that connect the outer ring wall 11 with the inner ring wall 12; the outer ring wall 11 has an outer side that forms a semi-closed tire groove 112 and an inner side that encloses together with the inner ring wall 12 and the side walls 13 to form a closed cavity 14; connecting portions 15 are arranged in the cavity 14; the connecting portions 15 have one end that is connected to the outer ring wall 11 and the other end that is connected to the side walls 13; the connecting portions 15 enclose together with the outer ring wall 11 and the side walls 13 to form hollow channels 16.

The entire rim is integrally formed from carbon fiber, and takes on a shape of a ring as a whole. The outer ring wall 11 is located on an outer ring of the rim and has two ends that extend outward to form extending portions 111, and they enclose to form a semi-closed tire groove 112, which is used for mounting a tire. The inner ring wall 12 is located on an inner ring of the rim, and the side walls 13 have one end that is connected to the outer ring wall 11 and the other end that is connected to the inner ring wall 12. Due to the arrangement of the two side walls 13, the outer ring wall 11, the inner ring wall 12, and the two side walls 13 ultimately enclose to form one cavity 14, which is arranged in a shape of a ring along the extending direction of the rim. The inner ring wall 12 usually needs to be provided with spoke holes for mounting spokes. Wherein, outer surfaces of the extending portions 111 or outer surfaces of both the extending portions 111 and parts of the side walls 13 form braking surfaces of the rim.

When the rim is used, the outer ring wall 11 (where the tire is mounted) thereof is the main force-bearing area. Through the arrangement of the connecting portions 15, they have a certain supporting effect on the outer ring wall 11, and can effectively improve the strength and impact resistance and enhance the stability. Through the arrangement of the hollow channels 16, they can effectively improve the strength of the rim, especially the impact resistance, without increasing the weight of the entire rim as compared with the existing rims of the same specification, thereby striking a good balance between the weight and the strength, and effectively improving the overall performance.

Wherein, the connecting portions 15 are connected to and arranged between the two side walls 13 and the outer ring wall 11. The two connecting portions 15 are symmetrically arranged, so that the impact resistance of the rim in all directions is more balanced and more stable.

The hollow channels 16 have an inner diameter of 2-6 mm. The hollow channels 16 are located at positions where the outer ring wall 11 are connected to the side walls 13. The inner diameter of the hollow channels 16 should not be too large, otherwise the extension length of the connecting portions 15 are too large, which requires more carbon fiber materials and results in an increase in the weight and cost of the entire rim. In addition, when the rim is used, the outer ring wall 11 thereof is the main force-bearing area; although the extension length of the connecting portions 15 is too long, it does not have a significant influence on the impact resistance of the entire rim; the inner diameter of the hollow channel 16 should not be too small, otherwise, either the connecting portions 15 are too short to improve the performance effectively, or the corresponding wall thickness is too great and the weight is too high. Preferably, the cross section of the hollow channels 16 takes on a shape of a circle, which has a diameter of 3-5 mm.

The hollow channels 16 are arranged in a shape of a ring along the rim body 10, which ensures the consistent performance across the entire rim while facilitating operation in the production and processing of the rim.

Wherein, the hollow channels 16 are pre-formed by preform strips 20 that are pre-embedded in the rim body 10, and the preform strips 20 have a thermal expansion coefficient of 5×10 ⁴ to 8.0×10⁻⁴/°C. The pre-forming is realized through the preform strips 20, and the preform strips 20 together with the product enter a molding die. In the molding course of applying heat and pressure to the product, the preform strips 20 provide a support force to facilitate forming the product. Therefore, it is required that the preform strips 20 can provide a support force and ensure that they can be drawn out after the molding of the product is completed. Preferably, the preform strips 20 have a slight elasticity and certain functions of heat-induced expansion and cooling-induced contraction. When heat and pressure are applied in the die, the volume thereof expands to some degree to facilitate molding the product. After the product is cooled, the preform strips 20 can be subjected to certain volume contraction, which facilitates drawing them out of the hollow channels 16. In the present embodiment, the material of the preform strips 20 is silica gel (silicone).

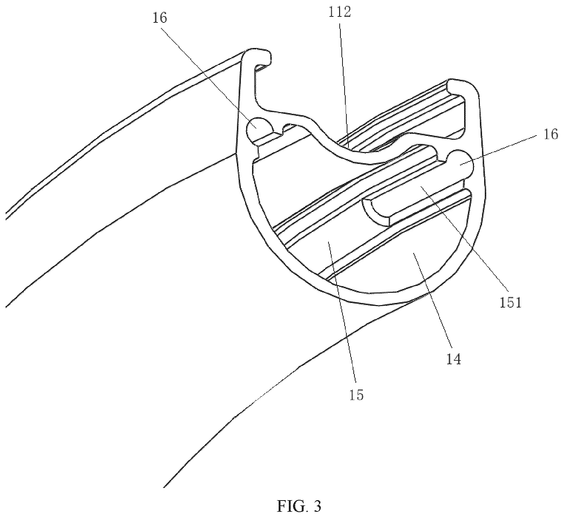

As shown in Figure 3, the connecting portions 15 are provided with receding notches 151 that are in communication with the cavity 14 and the hollow channels 16, and the preform strips 20 have end portions that are correspondingly exposed at the receding notches 151. The end portions of the preform strips 20 are exposed in the cavity 14 at positions of the receding notches 151. When the product is pre-formed, the carbon fiber prepregs are attached to and laid on the surface of the preform strips 20 to pre-form the hollow channels 16. In this course, the end portions of the preform strips 20 need to be exposed, and the carbon fiber prepregs are not attached thereto. After the corresponding product is formed, one receding notch 151 that are in communication with the hollow channel 16 and the cavity 14 is formed, and the preform strips 20 are also drawn out of the hollow channel 16 through the receding notch 151. The receding notch 151 is designed to facilitate drawing out the preform strips 20. The length of the preform strips 20 should not be too long, otherwise it is not conducive to drawing out the preform strips 20 and will increase the risk of breakage. Preferably, one hollow channel 16 is pre-formed by splicing two preform strips 20 in a head-to-tail manner, and the preform strips 20 have end portions that are exposed through the receding notches 151, i.e., one hollow channel 16 has two receding notches 151 correspondingly.

The present disclosure further discloses a manufacturing method of a carbon fiber bicycle rim, which is used for preparing the above carbon fiber bicycle rim, and comprises the following steps:
S1: preparing a rim preform fixture, preform strips 20, and well-cut carbon fiber prepregs.

The shape and size of the rim preform fixture are designed according to the shape and size of the rim. The carbon fiber prepregs have been cut into multiple smaller sheet structures according to the shape of the rim. The well-cut carbon fiber prepregs are sequentially attached and layered in the preform fixture according to the designed attachment process, which can pre-form the shape of the rim, with shape and size consistent with the final product. This course fall under the prior art, and will not be elaborated herein. The preform strips 20 are a component for pre-forming the hollow channels 16.

S2: attaching and laying the carbon fiber prepregs in the rim preform fixture correspondingly to pre-form a rim shape, wherein the preform strips are coated with the carbon fiber prepregs to pre-form hollow channels 16, and the preform strips 20 have end portions that are left exposed outside the hollow channels 16, while an airbag is placed inside a cavity 14 that is pre-formed.

The course of pre-forming the rim through a preform fixture and placing an airbag into the pre-formed cavity 14 is basically the same as the pre-forming course of the existing rims. The difference is that the process of the present disclosure requires coating the preform strips 20 with the carbon fiber prepregs, so that the positions thereof correspond to the hollow channels 16 as pre-formed.

The end portions of the preform strips 20 are left exposed outside the hollow channel 16, so that after the product is molded, the preform strips 20 can be drawn out of the hollow channels 16 through the end portions of the preform strips 20 to reduce the overall weight of the rim.

To draw out the preform strips 20 in a better manner, the preform strips 20 are first coated with one layer of isolating film 30, and the preform strips 20 and the isolating film 30 together are then coated with the carbon fiber prepregs. Wherein, the isolating film 30 is made from a PA film (nylon) or other suitable thin films. The isolating film 30 has a thickness of less than 0.05 mm, and the weight thereof is almost negligible (ultimately left in the hollow channels 16). However, the isolating film 30 can effectively prevent the preform strips 20 from sticking to the rim, thereby facilitating drawing out the preform strip 20. Further, the preform strips 20 are first coated with one layer of talcum powder or other materials that can reduce friction, which further facilitates drawing the preform strips 20 out of the isolating film 30.

In the present embodiment, the preform strips 20 are made from silica gel (silicone), which has certain elasticity and certain functions of heat-induced expansion and cooling-induced contraction. In the environment of applying heat and pressure in the die, the volume thereof expands, which is more conducive to product molding. After the product is cooled, the volume of the silica gel preform strips 20 shrinks to a certain extent, which makes it easier to extract from the hollow channels 16.

In addition, to draw out the preform strips 20 in a better manner, one hollow channel 16 is pre-formed by splicing two preform strips 20 in a head-to-tail manner, and both ends of the preform strips 20 are exposed in the cavity 14. The receding notches 151 in communication with the cavity 14 and the hollow channels 16 are correspondingly formed at positions where the end portions of the preform strips 20 are exposed. In other words, one hollow channel 16 has two receding notches 151, and two preform strips 20 can be drawn out of any of the receding notches 151. Preferably, the two receding notches 151 are located on the same diameter of the rim.
S3: placing a pre-formed product into a molding die, and applying heat and pressure for molding;
S4: removing a molded product from the molding die, machining communication holes that are in communication with the cavity 14, and drawing out the preform strips 20 from the communication holes at receding notches.

After the product is molded, the airbag and the preform strips 20 need to be removed. The method of removing the airbag fall under the prior art, and will not be elaborated herein. After the product is cooled, the preform strips 20 are removed. At this moment, communication holes that are in communication with the cavity 14 need to be machined on the rim. Through the communication holes, the preform strips 20 are drawn out of the hollow channels 16. Preferably, the communication holes are spoke assembling holes that are located on the outer ring wall 12 (spoke assembling holes need to be machined on both the outer ring wall 11 and the inner ring wall 12 of the rim body 10, the spoke assembling holes on the inner ring wall 12 are used for fitting assembly with spokes, the spoke assembling holes on the outer ring wall 11 are passages for nuts, which enter the cavity and are fixedly assembled with the spokes, and the spoke assembling holes on the outer ring wall 11 are usually larger than those on the inner ring wall 12). By ingeniously utilizing the existing structure, there is no need to machine additional communication holes. A single hole achieves dual functionality, thereby improving the efficiency and reducing the cost.

The above content only relates to preferred specific manners of implementation of the present disclosure, but the scope of protection of the present disclosure is not limited thereto. Any changes or substitutions that can be easily conceived by those skilled in the art within the technical scope of the disclosure in the present disclosure should fall within the scope of protection of the present disclosure. Therefore, the scope of protection of the present disclosure should be based on the scope of protection of the claims.

## Claims

1. A carbon fiber bicycle rim, **characterized by** comprising a ring-shaped rim body (10), which is integrally formed from carbon fiber, wherein the rim body (10) comprises an outer ring wall (11), an inner ring wall (12), and two side walls (13) that connect the outer ring wall (11) with the inner ring wall (12), the outer ring wall (11) has an outer side that forms a semi-closed tire groove (112) and an inner side that encloses together with the inner ring wall (12) and the side walls (13) to form a closed cavity (14), connecting portions (15) are arranged in the cavity (14), the connecting portions (15) have one end that is connected to the outer ring wall (11) and the other end that is connected to the side walls (13), and the connecting portions (15) enclose together with the outer ring wall (11) and the side walls (13) to form hollow channels (16).

2. The carbon fiber bicycle rim according to claim 1, **characterized in that** the connecting portions (15) are connected to and arranged between the two side walls (13) and the outer ring wall (11).

3. The carbon fiber bicycle rim according to claim 1, **characterized in that** the hollow channels (16) have an inner diameter of 2-6 mm.

4. The carbon fiber bicycle rim according to claim 1, **characterized in that** the hollow channels (16) are arranged in a shape of a ring along the rim body (10).

5. The carbon fiber bicycle rim according to claim 1, **characterized in that** the hollow channels (16) are pre-formed by preform strips (20) that are pre-embedded in the rim body (10), and the preform strips (20) have a thermal expansion coefficient of 5×10⁻⁴ to 8.0×10⁻⁴/°C.

6. The carbon fiber bicycle rim according to claim 1, **characterized in that** the connecting portions (15) are provided with receding notches (151) that are in communication with the cavity (14) and the hollow channels (16), and the preform strips (20) have end portions that are correspondingly exposed at the receding notches (151).

7. A manufacturing method of a carbon fiber bicycle rim, **characterized in that** the method is used for preparing the carbon fiber bicycle rim according to any one of claims 1 to 6, and comprises steps as follows:
S1: preparing a rim preform fixture, preform strips (20), and well-cut carbon fiber prepregs;
S2: attaching and laying the carbon fiber prepregs in the rim preform fixture correspondingly to pre-form a rim shape, wherein the preform strips (20) are coated with the carbon fiber prepregs to pre-form hollow channels (16), and the preform strips (20) have end portions that are left exposed outside the hollow channels (16), while an airbag is placed inside a cavity (14) that is pre-formed;
S3: placing a pre-formed product into a molding die, and applying heat and pressure for molding;
S4: removing a molded product from the molding die, machining communication holes that are in communication with the cavity (14), and drawing out the preform strips (20) from the communication holes at receding notches (151).

8. The manufacturing method of a carbon fiber bicycle rim according to claim 7, **characterized in that** in step S2, the preform strips (20) are first coated with one layer of isolating film (30), and the preform strips (20) and isolating film (30) together are then coated with the carbon fiber prepregs.

9. The manufacturing method of a carbon fiber bicycle rim according to claim 7, **characterized in that** one hollow channel (16) is pre-formed by splicing two preform strips (20), which have both ends that are exposed inside the cavity (14), and the receding notches (151) in communication with the cavity (14) and the hollow channel (16) are formed at positions where the end portions of the preform strips (20) are exposed.

10. The manufacturing method of a carbon fiber bicycle rim according to claim 7, **characterized in that** the communication holes are spoke assembling holes.
